Europäisches Patentamt

European Patent Office

Office européen des brevets

(19)

(11) Veröffentlichungsnummer: **0 234 548**

**A2**

(12) **EUROPÄISCHE PATENTANMELDUNG**

(21) Anmeldenummer: **87102562.3**

(22) Anmeldetag: **24.02.87**

(51) Int. Cl.⁴: **B21D 43/00** , **E06B 9/266** , **B23D 31/00** , **B23Q 15/24**

(30) Priorität: **26.02.86 DE 3606182**

(43) Veröffentlichungstag der Anmeldung:
**02.09.87 Patentblatt 87/36**

(84) Benannte Vertragsstaaten:
**DE FR GB IT NL SE**

(71) Anmelder: **Huber, Bartholomäus**
**Trappenpfad 32**
**D-1000 Berlin 47(DE)**
Anmelder: **Kowalewski, Reinhard**
**Nordhauser Strasse 1**
**D-1000 Berlin 10(DE)**

(72) Erfinder: **Huber, Bartholomäus**
**Trappenpfad 32**
**D-1000 Berlin 47(DE)**
Erfinder: **Kowalewski, Reinhard**
**Nordhauser Strasse 1**
**D-1000 Berlin 10(DE)**

(74) Vertreter: **Selting, Günther, Dipl.-Ing. et al**
**Deichmannhaus am Hauptbahnhof**
**D-5000 Köln 1(DE)**

(54) **Werkzeugmaschine zum Ablängen und Lochen von Profilleisten.**

(57) Die Werkzeugmaschine weist hinter einer Trennvorrichtung (29) und Stanzvorrichtungen (23,24) einen langgestreckten horizontalen Rahmen (38) auf,
auf dem ein Schlitten (40) verfahrbar ist. Der Schlitten (40) trägt Klemmvorrichtungen (49a,49b,49c)
zum automatischen Festklemmen der Profilleistenenden. Eine Antriebseinrichtung (41-44) steuert den
Schlitten in der Weise, daß er an vorprogrammierten
Haltepositionen anhält, so daß die Stanzvorrichtungen (23,24) und die Trennvorrichtung (29) auf die
Profilleisten einwirken können. Die Schlittenposition
wird durch einen Signalgeber (47) laufend
überwacht.

FIG 1

## Werkzeugmaschine zum Ablängen und Lochen von Profilleisten

Die Erfindung betrifft eine Werkzeugmaschine zum Ablängen und Lochen von Profilleisten, insbesondere für die Bearbeitung von Jalousieprofilen.

Zur Herstellung einer Jalousie mit verstellbaren horizontalen Lamellen benötigt man als Hauptkomponenten eine Oberleiste (Kopfprofil), eine Unterleiste (Unterprofil) und eine Wendeachse. Diese Profile müssen auf die Breite des jeweiligen Fensters zugeschnitten werden und sie müssen mit Ausstanzungen zur Aufnahme weiterer Bauteile versehen werden, deren Anzahl und Abstand zueinander von der Fensterbreite abhängig ist.

Es ist bekannt, die drei Komponenten Oberleiste, Unterleiste und Wendeachse mit einer einzigen Werkzeugmaschine gleichzeitig zu bearbeiten und dabei gleichzeitig vorzuschieben, so daß die Ausstanzungen an der Oberleiste und der Unterleiste deckungsgleich zueinander erzeugt werden. Für diese Arbeiten werden Handstanzen und halbautomatische Werkzeugmaschinen eingesetzt. Die Werkzeugmaschinen bestehen prinzipiell aus einem Gestell, Werkzeugsatz, Einstellskala, Anschlägen und Fahrschlitten. Zur Bearbeitung der Profilleisten ist es notwendig, die einzelnen Stanzpositionen zu berechnen und diese ebenso wie das Ablängmaß auf der Skala mittels verschiebbarer und arretierbarer Anschläge festzulegen. Danach werden die Profile durch den Werkzeugsatz geführt und auf einem schienengeführten Wagen mechanisch arretiert. Der Wagen mit den Profilleisten wird anschließend manuell zum ersten Anschlag geschoben. Danach wird die Stanzeinheit manuell ausgelöst. Der Anschlag muß danach entriegelt werden, so daß er überfahren werden kann, um den zweiten Anschlag anzufahren. Beim Erreichen des letzten Anschlags wird die Trennvorrichtung ausgelöst.

Die bekannte Art der Bearbeitung von Profilleisten birgt die folgenden Fehlerquellen in sich:

a) Zur Ermittlung der Stanzpositionen muß als Bezugsgröße das der Fensterbreite entsprechende Ablängmaß herangezogen werden; hierzu sind mehrere Rechenoperationen notwendig, bei denen Rechenfehler auftreten können. Bei Benutzung einer Tabelle können Ablese-und Übertragungsfehler auftreten; die üblichen Tabellen sind in Schritten von 5 bis 10 mm ausgeführt, so daß man keine Zwischenwerte erhält und ein einheitliches Teilungsmaß nicht möglich ist. Da die Oberleiste oder die Unterleiste als Einstellschablone für die nachgeordnete Lamellenstanz und Ablängmaschine benutzt wird, wirken sich Fertigungsungenauigkeiten der betreffenden Leiste auch auf die Lamellenfertigung aus.

b) Die berechneten Werte müssen auf eine Einstellskala übertragen werden, wobei ebenfalls Übertragungs-und Einstellfehler auftreten können.

Bei der Fertigung mit den bekannten Maschinen ist ein hoher Anteil an manueller Tätigkeit erforderlich. Zur maßgerechten Einzelfertigung von Jalousien muß die Maschine ständig neu eingerichtet werden. Der Maschinenbediener muß zur Arretierung der Anschläge und zum nachfolgenden Anfahren der Stanzpositionen ständig an der Maschine hin-und herlaufen und die erforderlichen Handgriffe durchführen. Die Zeit zum Einrichten der Maschine ist länger als die eigentliche Bearbeitungszeit.

Der Erfindung liegt die Aufgabe zugrunde, eine Werkzeugmaschine nach dem Oberbegriff des Patentanspruchs 1 zu schaffen, die eine schnelle und maßgerechte Bearbeitung der Profilleisten ermöglicht, ohne daß Anschläge eingestellt und entriegelt werden müßten.

Die Lösung dieser Aufgabe erfolgt erfindungsgemäß mit den Merkmalen des kennzeichnenden Teils des Patentanspruchs 1.

Bei der erfindungsgemäßen Werkzeugmaschine werden die Enden der gleichzeitig zu bearbeitenden Profilleisten an den Klemmvorrichtungen des Wagens festgeklemmt. Anschließend bewegt sich der Wagen unter Steuerung durch das Steuerwerk und den Signalgeber in die erste Halteposition, in der die Lochung der Profilleisten durchgeführt wird. Anschließend wird automatisch die zweite Halteposition aufgesucht. Die Haltepositionen können entweder nach vorheriger Berechnung in das Steuerwerk eingegeben werden oder sie können zweckmäßigerweise auch von einem Rechner ermittelt werden, dem lediglich die Soll-Länge der Profilleisten eingegeben wird und der hieraus selbsttätig die Lochpositionen ermittelt und über ein Interface an das Steuerwerk überträgt. Der Maschinenbediener braucht lediglich die Profilleisten so in die Maschine einzuführen, daß ihre Enden von den Klemmvorrichtungen des Wagens ergriffen werden. Alle übrigen Verstell-und Bearbeitungsvorgänge werden von der Maschine selbsttätig ausgeführt. Im Anschluß an den Trennvorgang, der nach dem Stanzen sämtlicher Löcher durchgeführt wird, werden die Klemmvorrichtungen freigegeben, so daß die fertigen Profilleisten entnommen werden können. Nach Betätigen eines Bedienungselementes fährt der Wagen dann in die Ausgangsposition zurück, in der er zur Aufnahme der Enden neuer Profilleisten bereit ist.

Bei der erfindungsgemäßen Werkzeugmaschine ist nicht nur die Bedienung erleichtert, mit der Folge, daß Rechenfehler, Übertragungsfehler und Einstellfehler vollständig oder mindestens weitgehend ausgeschlossen sind, sondern die Bedienungsperson wird auch von der Notwendigkeit entlastet, während des Bearbeitungsvorganges Anschläge für die Halteposition des Wagens ständig einstellen und auslösen zu müssen. Die Tätigkeiten der Bedienungsperson beschränken sich im wesentlichen auf das Einführen der Profilleisten in die Maschine und deren Entnahme nach erfolgter Fertigung sowie auf die lediglich optische Überwachung des ordnungsgemäßen Fertigungsablaufs.

Gemäß einer vorteilhaften Weiterbildung der Erfindung ist jede Klemmvorrichtung von einem Sensor gesteuert, der auf die Anwesenheit des Profilleistenendes in der Klemmvorrichtung anspricht. Hierdurch wird die Bedienungsperson ebenfalls entlastet, weil die Klemmvorrichtungen selbsttätig ansprechen, sobald ein Profilleistenende eingeschoben worden ist. Die Freigabe der Klemmvorrichtungen erfolgt nach Beendigung der Bearbeitung unter Steuerung durch das Steuerwerk.

Gemäß einer vorteilhaften Weiterbildung der Erfindung ist vorgesehen, daß mindestens eine Klemmvorrichtung an dem Wagen in Längsrichtung gegenüber einer anderen Klemmvorrichtung versetzt angeordnet ist. In der Regel hat die Wendeachse eine Länge, die kürzer ist als diejenige von Oberleiste und Unterleiste. Diese Längendifferenz von z.B. 90 mm wird dadurch erzielt, daß die Klemmvorrichtung für die Wendeachse gegenüber den Klemmvorrichtungen für die beiden anderen Leisten um 90 mm versetzt angeordnet ist.

Im folgenden wird unter Bezugnahme auf die Zeichnungen ein bevorzugtes Ausführungsbeispiel der Erfindung näher erläutert.

Es zeigen:

Fig. I eine perspektivische Darstellung der Werkzeugmaschine,

Fig. 2 eine perspektivische Darstellung einer Jalousie, für die die herzustellenden Profilleisten bestimmt sind,

Fig. 3 eine perspektivische Vorderansicht des Wagens aus Richtung des Pfeiles III in Fig. 1 und

Fig. 4 eine Ansicht der Maschine von der Beschickungsseite aus Richtung des Pfeiles IV in Fig. 1.

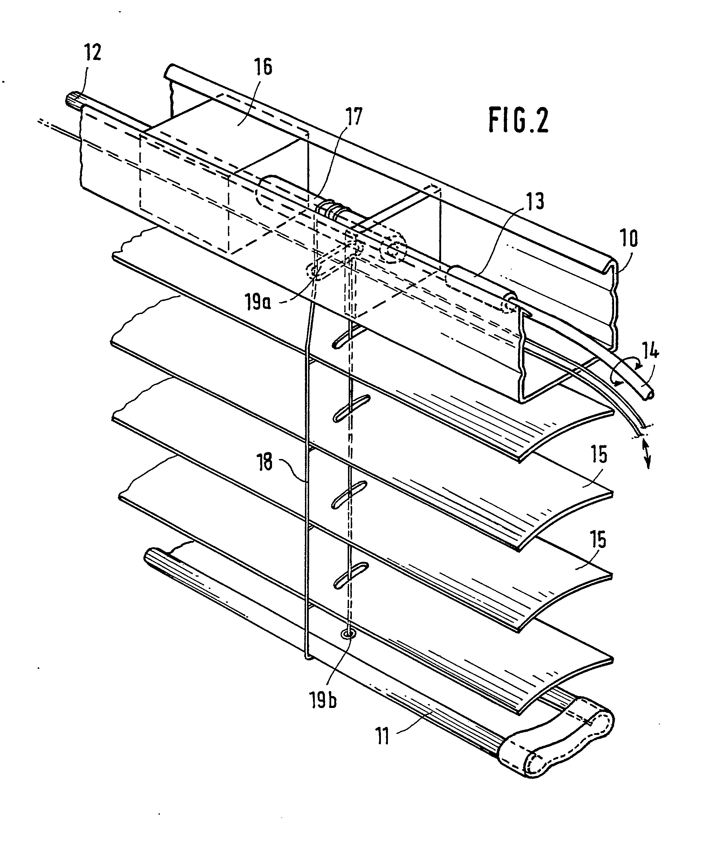

Bevor die Werkzeugmaschine im einzelnen beschrieben wird, soll zunächst anhand von Fig. 2 der Aufbau einer Jalousie, für die die zu bearbeitenden Profilleisten benötigt werden, erläutert werden. Die Jalousie weist eine U-förmige Oberleiste 10 auf, an der die Unterleiste 11 hängend angebracht ist. Die Oberleiste 10 enthält die stabförmige Wendeachse 12, deren Ende über ein Kupplungsstück 13 mit einer flexiblen Welle 14 verbunden ist, die zum Verstellen der Lamellen 15 gedreht werden kann.

Die Wendeachse 12 ist in Lagerböcken 16 in der Oberleiste 10 gelagert und sie trägt mehrere Aufwickelhülsen 17, auf die jeweils mehrere Windungen eines Leiterkordelbandes 18 aufgewickelt sind. Das Leiterkordelband 18 führt durch Schlitze 19a im Boden der Oberleiste 10 und der Lamellen 15 sowie durch ein Loch 19b der Unterleiste 11 hindurch, um seitlich neben den Lamellen 15, zurück durch den Schlitz 19a der Oberleiste, auf die Wickelhülse 17 zu laufen. Die Position der Schlitze 19a an der Oberschiene 10 und Löcher 19b an der Unterschiene 11 müssen miteinander übereinstimmen. Die nachfolgend beschriebene Werkzeugmaschine dient zum Stanzen der Schlitze 19a und Löcher 19b und zum gleichzeitigen und gemeinsamen Ablängen der Oberschiene 10, der Unterschiene 11 und der Wendeachse 12. Die Maschine eignet sich nicht nur für die Herstellung von Jalousieprofilen, sondern generell zum gleichzeitigen und konformen Bearbeiten und Ablängen von mehreren Profilleisten.

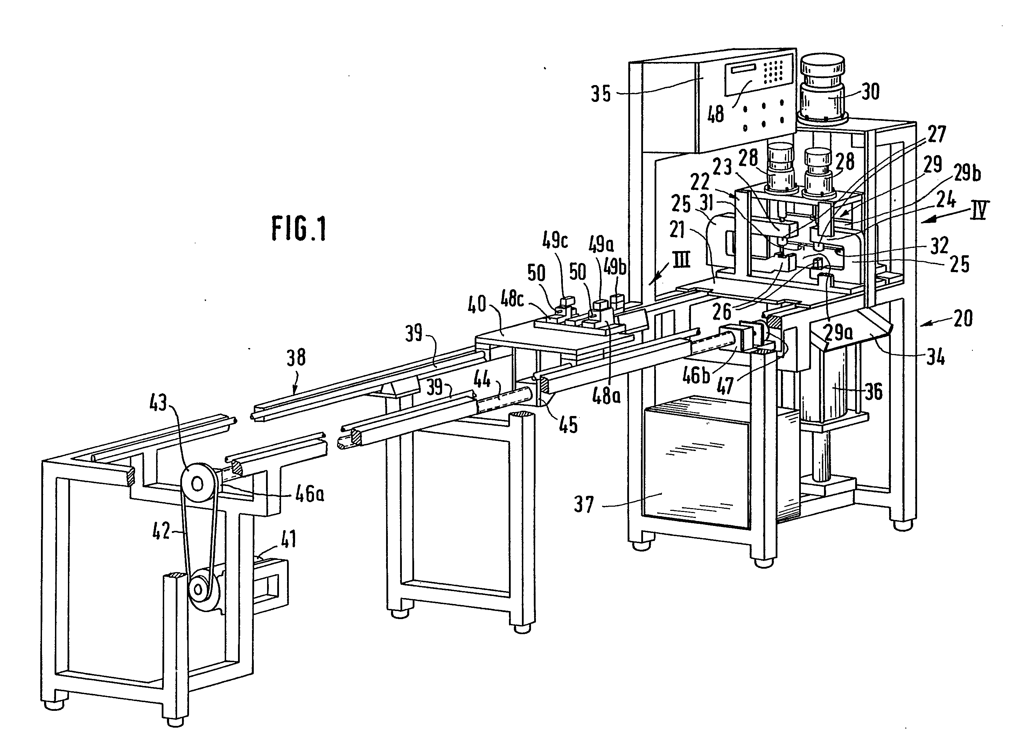

Die in Fig. 1 dargestellte Werkzeugmaschine weist ein Gestell 20 auf, in dem auf einem Arbeitstisch 21 ein Hilfsrahmen 22 befestigt ist, welcher zwei nebeneinander angeordnete Stanzvorrichtungen 23, 24 trägt. Jede der Stanzvorrichtungen 23, 24 weist einen vertikalen U-förmigen Bügel 25 auf, an dessen unterem Schenkel das als Gegenhalter wirkende Werkzeug 26 befestigt ist, während an dem oberen Schenkel das Stanzwerkzeug 27 bewegbar angebracht ist. Jedes Stanzwerkzeug 27 wird von einem auf dem Hilfsrahmen 22 montierten Hydraulikzylinder 28 betätigt.

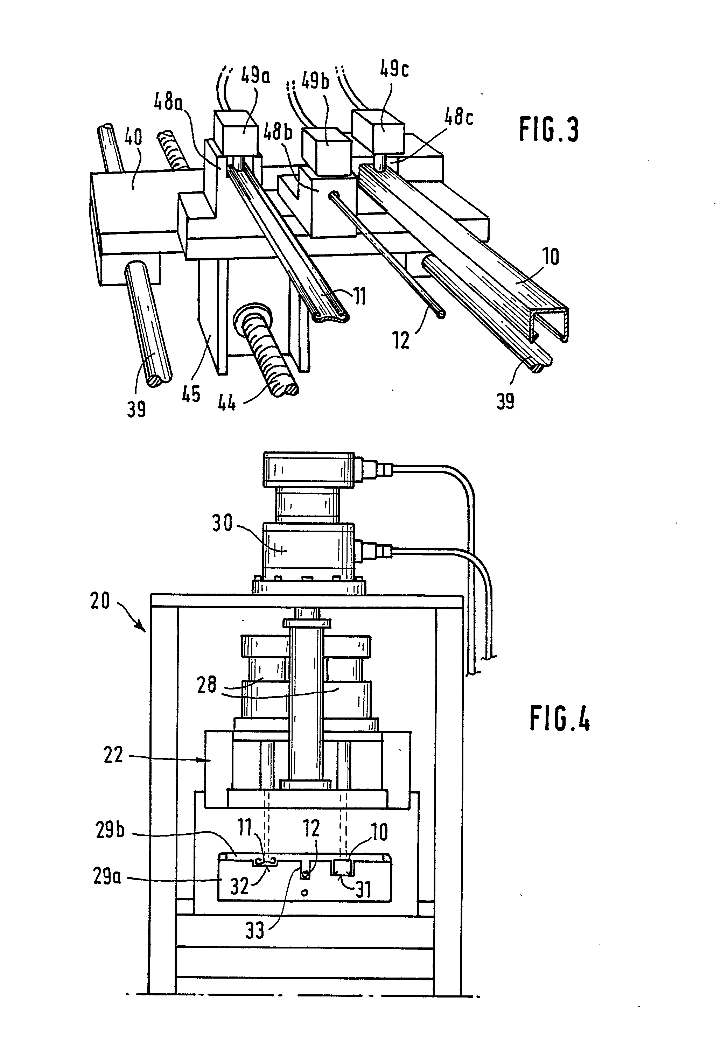

In unmittelbarer Nähe der nebeneinander angeordneten Stanzvorrichtungen 23 und 24 ist im Transportweg der Profilleisten vor diesen Stanzvorrichtungen die Trennvorrichtung 29 angeordnet. Diese Trennvorrichtung weist ein feststehendes unteres Scherenteil 29a und ein vertikal bewegbares oberes Scherenteil 29b auf. Das obere Scherenteil 29b wird von einem Hydraulikzylinder 30 bewegt, der auf dem Gestell 20 montiert ist. An dem unteren Scherenteil 29a befinden sich Aussparungen 31, 32, die jeweils der Kontur der betreffenden Profilleiste entsprechen und diese innen und seitlich abstützen. Demgemäß hat die Ausnehmung 31 die Form eines U-förmigen Ausschnitts, der dem Profil der Oberleiste 10 entspricht und die Ausnehmung 32 ist entsprechend dem Profil der Unterleiste 11 geformt. Zwischen diesen beiden Ausnehmungen 31 und 32 befindet sich eine - schlitzförmige weitere Aussparung 33 (Fig. 4) zum Einsetzen der stabförmigen Wendeachse 12. Das obere Scherenteil 29b bewegt sich bei seiner Abwärtsbewegung an dem unteren Scherenteil 29a entlang, so daß die von dem unteren Scherenteil abgestützten Profilleisten unter Scherung abgeschnitten werden.

Die von den Stanzvorrichtungen 23 und 24 aus dem Mate rial der Profilleisten ausgestanzten Teile fallen über eine Rutsche 34 in einen (nicht dargestellten) Abfallbehälter.

Die Hydraulikzylinder 28 und 30 werden in noch zu erläuternder Weise von dem Steuerwerk 35 über Magnetventile gesteuert. Als Hydraulikquelle dient ein Druckübersetzer 36, der unter dem Tisch 21 im Gestell 20 angeordnet ist und zur Erzeugung des erforderlichen Hydraulikdruckes mit Druckluft gespeist wird. In einem ebenfalls im Gestell 20 montierten Schrank 37 befinden sich die Komponenten für die Antriebs-und Leistungssteuerung der Werkzeugmaschine.

Das Gestell 20 ist ausgangsseitig mit einem horizontalen langgestreckten Rahmen 38 verbunden, der parallele lineare Führungsschienen 39 aufweist, auf denen der Wagen 40 horizontal verschiebbar geführt ist. An dem dem Gestell 20 abgewandten Ende des Rahmens 38 befindet sich der polumschaltbare Bremsmotor 41 für den Vorschub des Wagens. Dieser Motor 41 treibt über einen Zahnriemen 42 und eine Zahnriemenscheibe 43 die Spindel 44, die längs des Rahmens 38 verläuft und in Eingriff mit der Spindelmutter 45 des Wagens 40 steht. Die beiden Enden der Spindel 44 sind in Spindellagern 46a und 46b gelagert. An dem Gestell 20 ist ein Signalgeber 47 angebracht, der als Drehimpulsgeber ausgebildet ist, welcher auf Impulse anspricht, die bei der Drehung der Spindel 44 erzeugt werden. Der Signalgeber 47 liefert demnach eine Information über die jeweilige Stellung des Wagens 40 in axialer Richtung. Das Auflösungsvermögen ist so, daß die Position des Wagens 40 entlang des linearen Transportweges mit einer Genauigkeit von 1/10 mm bestimmt werden kann. Die Positionsdaten des Signalgebers 47 werden an das Steuerwerk 35 geliefert.

Der Motor 41 ist ein polumschaltbarer Motor mit Bremse. Dieser Motor 41 wird von dem Steuerwerk 35 in Abhängigkeit von den Signalen des Signalgebers 47 und von den Daten der jeweiligen Haltepositionen gesteuert. Das Steuerwerk 35 weist ein Bedienungs-und Anzeigefeld 48 auf, mit einer Tastatur zum Eingeben der Haltepositionen. Außerdem sind Bedienungselemente für den Wagenrücklauf, den Notstopp u.dgl. vorgesehen.

Auf dem Wagen 40 befinden sich drei Aufnahmevorrichtungen 48a, 48b und 48c für die Enden der Profilleisten. Jede Aufnahmevorrichtung ist an die Form der Profilleiste angepaßt. Die Aufnahmevorrichtung 48b für die Wendeachse 12 weist ein Loch auf, in daß das Ende der Wendeachse eingesteckt ist. Jede Aufnahmevorrichtung weist eine pneumatische Klemmvorrichtung 49a, 49b, 49c auf. Wenn das Ende der Profilleiste in die betreffende Aufnahmevorrichtung eingesetzt worden ist, wird dies von einem an der Aufnahmevorrichtung vorgesehenen Sensor 50 erkannt, der daraufhin über das Steuerwerk die Betätigung der zugehörigen Spannvorrichtung bewirkt.

Die beschriebene Werkzeugmaschine arbeitet wie folgt:

Die Fertigungsmaße der Profilleisten werden dem Steuerwerk 35 entweder manuell eingegeben oder über einen (nicht dargestellten) Rechner mitgeteilt. Die Profile werden der Maschine auf einem (nicht dargestellten) Rollenband zugeführt und in die Ausnehmungen 31, 32, 33 der Trennvorrichtung 29 eingesetzt, während die Trennvorrichtung 29 und die Stanzvorrichtungen 23, 24 im offenen Zustand sind. Die vorderen Enden der Profil leisten werden dann in die Aufnahmevorrichtungen 48a, 48b, 48c eingesetzt, wobei über die Sensoren 50 die zugehörigen Klemmvorrichtungen 49a, 49b und 49c betätigt werden. In diesem Zustand befindet sich der Wagen 40 in seiner Endstellung in einer programmierbaren Startposition in der Nähe des Gestells 20. Unter Steuerung durch das Steuerwerk wird nunmehr der Motor 41 angetrieben, so daß der Wagen 40 in seine erste Halteposition gefahren wird, in der Stanzvorgänge an den Profilleisten durchgeführt werden. Das Erreichen der Halteposition wird anhand der Signale des Signalgebers 47 erkannt. Auf diese Weise werden alle Haltepositionen angefahren und die vorprogrammierten Funktionen werden ausgeführt. Am Schluß der Bearbeitung erfolgt das gleichzeitige Ablängen aller drei Profilleisten durch die Trennvorrichtung 29. Nach einem Freihub von etwa 5 - 6 cm wird eine Fertigmeldung gegeben. Die Bedienungsperson entnimmt die fertiggestellten Profile und betätigt ein bestimmtes Bedienungselement, woraufhin der Wagen 40 wieder in die Ausgangsposition in der Nähe des Gestells 20 zurückfährt.

Der Fertigungsvorgang wird durch die integrierte Wegkontrolle vollautomatisch gesteuert und ausgeführt. Der Bediener hat nur noch die Profile zuzuführen, zu entnehmen und den Fertigungsvorgang zu überwachen. Durch eine Schnellwechselvorrichtung ist es möglich, die Stanz-und Trennwerkzeuge auszuwechseln, um Profilleisten mit unterschiedlichen Profilen verarbeiten zu können.

## Ansprüche

1. Werkzeugmaschine zum Ablängen und Lochen von Profilleisten, mit einer Bearbeitungsstation, die eine Trennvorrichtung (29) und je eine Stanzvorrichtung (23,24) für mindestens zwei parallele Profilleisten aufweist, und mit einem hinter der Bearbeitungsstation auf Schienen (39) geführten Wagen (40) zur Aufnahme der Enden der Profilleisten,

**dadurch gekennzeichnet,**
daß der Wagen (40) Klemmvorrichtungen (49a,49b, 49c) aufweist und von einer Antriebseinrichtung - (41-44) angetrieben ist, daß ein die Halteposition des Wagens (40) vorgebendes Steuerwerk vorgesehen ist, das die Antriebseinrichtung derart gesteuert ist, daß der Wagen (40) anhält, wenn ein mit der Antriebseinrichtung gekoppelter Signalgeber (47) eine Position anzeigt, die einer Halteposition entspricht, und daß die Betätigungen der Trennvorrichtung (29) und der Stanzvorrichtungen - (23,24) durch Steuersignale des Steuerwerks (35) in Abhängigkeit von der jeweiligen Halteposition des Wagens erfolgen.

2. Werkzeugmaschine nach Anspruch 1, dadurch gekennzeichnet, daß jede Klemmvorrichtung (49a,49b,49c) von einem Sensor (50) gesteuert ist, der auf die Anwesenheit des Profilleistenendes in der Klemmvorrichtung anspricht.

3. Werkzeugmaschine nach Anspruch 1 oder 2, dadurch gekennzeichnet, daß mindestens eine Klemmvorrich tung (49b) an dem Wagen (40) in Längsrichtung gegenüber einer anderen Klemmvorrichtung (49a,49c) versetzt angeordnet ist.

4. Werkzeugmaschine nach einem der Ansprüche 1 bis 3, dadurch gekennzeichnet, daß die Klemmvorrichtungen (49a,49b,49c) von dem Steuerwerk (35) derart gesteuert sind, daß sie die Profilleisten nach Durchführung eines Trennvorgangs freigeben, und daß anschließend an den Trennvorgang der Wagen (40) nach Betätigung eines Bedienungselementes in einer Ausgangsposition in der Nähe der Bearbeitungsstation zurückfährt.

5. Werkzeugmachine nach einem der Ansprüche 1 bis 4, dadurch gekennzeichnet, daß die Antriebseinrichtung (41-44) eine parallel zu den Schienen (39) verlaufende Spindel (44) aufweist, die mit einer Spindelmutter (45) des Wagens (40) in Eingriff ist und von einem ortsfesten reversiblen Motor (41) angetrieben ist.

FIG.1

0 234 548

FIG.2

FIG.3

FIG.4